Europäisches Patentamt

European Patent Office

Office européen des brevets

(19)

(11) **EP 0 640 866 B1**

(12) # FASCICULE DE BREVET EUROPEEN

(45) Date de publication et mention
de la délivrance du brevet:
**22.10.1997 Bulletin 1997/43**

(51) Int Cl.$^6$: **G02F 3/02**

(21) Numéro de dépôt: **94401819.1**

(22) Date de dépôt: **05.08.1994**

(54) **Bistable du type SEED, tout optique**

**Reine optische bistabile Vorrichtung vom "SEED"-Typ**

**All-optical bistable device of "SEED"-type**

(84) Etats contractants désignés:
**DE GB**

(30) Priorité: **26.08.1993 FR 9310281**

(43) Date de publication de la demande:
**01.03.1995 Bulletin 1995/09**

(73) Titulaires:
- **CENTRE NATIONAL DE
  LA RECHERCHE SCIENTIFIQUE (CNRS)
  75794 Paris Cédex 16 (FR)**
- **FRANCE TELECOM
  75015 Paris (FR)**

(72) Inventeurs:
- **Voisin, Paul
  F-75005 Paris (FR)**
- **Couturier, Jérôme
  F-75013 Paris (FR)**
- **Harmand, Jean-Christophe
  F-94800 Villejuif (FR)**

(74) Mandataire: **Plaçais, Jean-Yves
  Cabinet Netter,
  40, rue Vignon
  75009 Paris (FR)**

(56) Documents cités:
- **CHINESE JOURNAL OF SEMICONDUCTORS,
  CHINA, vol.14, no.4, Avril 1993 pages 251-255;
  Zhang Yaohui et al. 'Electro-optical bistability
  and multistability effects in
  GaAs/Ga(0.7)Al(0.3)As short-period
  superlattices'**
- **APPLIED PHYSICS LETTERS, vol.62, no.20, Mai
  1993, NEW YORK US pages 2492-2494,
  XP000303623; Tokuda Y et al. 'Optical bistable
  responses based on self-electro-optic effect in a
  nonbiased asymmetric coupled quantum well
  p-i-n photodiode'**
- **JAPANESE JOURNAL OF APPLIED PHYSICS,
  PART 1 (REGULAR PAPERS & SHORT NOTES),
  vol.31, no.9A, Septembre 1992, TOKYO JP pages
  2682-2686, XP000371968; Kawashima K et al.
  'Transmission self-electro-optic effect devices
  based on Wannier-Stark localization in a
  GaAs/AlAs superlattice'**
- **APPLIED PHYSICS LETTERS, vol.57, no.13,
  Septembre 1990, NEW YORK US pages
  1345-1347, XP000163125; Law K-K et al.
  'Self-electro-optic device based on a
  superlattice asymmetric Fabry-Perot modulator
  with an on/off ratio 100:1'**
- **SUPERLATTICES AND MICROSTRUCTURES,
  vol.8, no.3, 1990, LONDON GB pages 323-327,
  XP000203414; Voisin P. 'Wannier-Stark
  quantization and its applications to
  electro-optical modulation'**
- **APPLIED PHYSICS LETTERS, vol.64, no.6,
  Février 1994, NEW YORK US pages 742-744,
  XP000422882; Couturier J. et al 'Low power
  all-optical bistability in InGaAs-AlInAs
  superlattices: Demonstration of a wireless
  self-electro-optical effect device operating at 1.5
  mu m'**

**(Cont. page suivante)**

- THIRD INTERNATIONAL CONFERENCE ON OPTICS OF EXCITONS IN CONFINED SYSTEMS, MONTPELLIER, FRANCE, 30 AUG.-2 SEPT. 1993, JOURNAL DE PHYSIQUE IV (COLLOQUE) VOL 3, OCT. 1993, FRANCE pages 253-256, XP000372053; Couturier J. et al 'Low power all-optical bistability in InGaAs-AlInAs superlattices: demonstration of a wireless self-electro-optical effect device'

**Description**

En son sens courant, le mot "électronique" est actuellement quasi synonyme de "traitement de signal", car ce traitement se fonde essentiellement sur des composants actifs électroniques.

Les applications de pointe en traitement de signal requièrent maintenant des traitements effectués massivement en parallèle, et à grande vitesse.

Or les composants actifs électroniques se prêtent assez mal aux traitements parallèles massifs. Ils sont également limités, en termes de vitesse de traitement, par la mobilité des porteurs de charge électrique.

On cherche donc depuis longtemps à créer des composants actifs "optiques", où le porteur d'information est le photon, potentiellement plus rapide, et surtout mieux adapté à un traitement massivement parallèle de l'information.

Une étape essentielle consiste à obtenir un "bistable optique", ce qui fait l'objet de recherches intenses depuis plusieurs années.

Une voie est apparue prometteuse, celle des SEED, qui sont des dispositifs à auto-effet électro-optique ("Self Electro-Optic Effect Devices"), décrits dans:

- "The Quantum Well Self-Electrooptic Effect Device: Opto-electronic Bistability and Oscillation, and Self-Linearised Modulation", D. A. B. MILLER et al., IEEE Journal of quantum electronics, Vol QE-21, N° 9, septembre 1985.

- "Self-electro-optic effect device and modulation convertor with InGaAS/InP multiple quantum wells", I. BAR-JOSEPH et al., Applied Physics Letters, 52 (1), 4 janvier 1988.

- "Optical Bistability in self-electro-optic effect devices with asymmetric quantum wells", D. A. B. MILLER, Applied Physics Letter, 54 (3), 16 janvier 1989.

- "Symmetric Self-Electrooptic Effect Device: Optical Set-Reset Latch, Differential Logic Gate, and Differential Modulator/Detector", A. L. LENTINE et al., IEEE Journal of quantum electronics, Vol QE-25, N° 8, août 1989.

- "Parallel interconnection of two 64x32 symmetric self electro-optic effect device arrays", F. B. McCormick et al., Electronic Letters, Vol. 27, N° 20, 26 septembre 1991.

- "Design and tolerancing comparisons for S-SEED based free-space switching fabrics", F. B. McCormick et al., Optical Engineering, Vol. 31, N° 12, décembre 1992.

La bistabilité électro-optique des SEED connus repose sur l'existence, dans un matériau semi-conducteur définissant un système de puits quantiques, d'un domaine d'électro-absorption négative: il existe une plage du spectre optique et un régime de champ électrique où l'absorption optique augmente lorsque le champ électrique diminue (en valeur absolue). Or l'absorption de lumière tend à diminuer le champ électrique que l'on applique au semiconducteur par un circuit extérieur, ce qui à son tour augmente l'absorption.

De la coopération entre le système de puits quantiques et le circuit extérieur, il résulte donc une contre-réaction électro-optique positive, c'est à dire une auto-amplification (l'auto-effet électro-optique).

Dans le cas des SEED décrits dans les publications ci-dessus, le domaine d'électro-absorption négative est dû au déplacement sous champ électrique du pic d'absorption dit "excitonique" dans des structures à puits quantiques, en raison de l'effet Stark confiné quantiquement, sur lequel on reviendra.

A côté de cela, le brevet EP-A-0 274 289 décrit un effet électro-optique nouveau observé dans des superréseaux. Cet effet, nommé par la suite effet Wannier-Stark, est également décrit dans les publications suivantes:

- "Electric-field-induced Localization and Oscillatory Electro-optical properties of semiconductor superlattices", J. BLEUSE, G. BASTARD, P. VOISIN, Physical Review Letters, Vol. 60, N° 3, 18 janvier 1988.

- "Blue shift of the absorption edge in AlGaInAs-GaInAS superlattices: Proposal for an original electro-optic modulator", J. BLEUSE, P. VOISIN, M. ALLOVON, M. QUILLEC, Applied Physics Letters, 53 (26), 26 décembre 1988.

- "Quand le champ électrique empêche les électrons de bouger", P. VOISIN, La Recherche N° 209, Avril 1989,

- "Wannier Quantization and novel electro-optical properties in semiconductor superlattices", P. VOISIN, Surface science, 228 (1990) 74-79,

- "Wannier-Stark Quantization and its application to electro-optical modulation", P. VOISIN, Superlattices and microstructures, Vol. 8, No 3, 1990,

- "Very low drive voltage optical waveguide modulation in an InGaAs-InAlAS superlattice", E. BIGAN, M. ALLOVON, M. CARRE, P. VOISIN, Applied Physics Letters, 57 (4), 23 juillet 1990,

- "La quantification de Wannier dans les superréseaux semiconducteurs: quand le champ électrique empêche les électrons de bouger", P. VOISIN, Bulletin de l'Union des Physiciens (France), N° 729, Décembre 1990.

Il a été observé que l'effet Wannier-Stark procure lui aussi un ou des domaines d'électro-absorption négative. Il permet par conséquent de fabriquer également des dispositifs électro-optiques bistables, dénommés par extension SEED à superréseaux, comme décrit dans :

- "Room-temperature electroabsorption and switching in a GaAs/AlGaAS superlattice" I. BAR-JOSEPH et al., Applied Physics Letters, 55 (4), 24 juillet 1989.

- "Normally-off high contrast asymmetric Fabry-Perot reflection modulator using Wannier-Stark localization in a superlattice", K.-K. Law et al., Applied Physics Letters, 56 (19), 7 Mai 1990.

- "Self electro-optic device based on a superlattice asymmetric Fabry-Perot modulator with an on/off ratio > 100:1", K.K. LAW et al., Applied Physics Letters, 57 (13), 24 Septembre 1990.

- "Optical switching in NxN arrays of individually addressable electroabsorption modulators based on Wannier-Stark carrier localization in GaAs/AlGaAS superlattices", G. R. OLBRIGHT et al., J. Opt. Soc. Am. B/Vol. 8, N° 2, Février 1991.

- "Transmission Self Electro-optic Effect Devices based on Wannier-Stark localization in GaAs/GaAlAs superlattice", K.Kawashima et al., Japanese Journal of Applied Physics, 31, Septembre 1992.

L'inconvénient commun à tous les types de SEED connus est qu'il faut leur appliquer une tension électrique. Ceci pose différents problèmes, dont:

- le fait que le circuit électrique producteur de cette tension introduit nécessairement une constante de temps de type R-C; il en résulte une perte substantielle sur les avantages de vitesse que l'on pouvait attendre d'un processus optique;

- plus particulièrement, il est souhaitable, notamment pour les traitements parallèles, de construire une matrice bidimensionnelle de tels dispositifs; mais il faut alors loger leurs circuits électriques d'alimentation, ce qui pose également problème.

Plus récemment, Y.Tokuda et al. ont montré qu'il était possible de réaliser des SEED à puits quantiques asymétriques et couplés, et montés en parallèle avec une résistance de charge, capable de bistabilité. Un tel dispositif ne fonctionne pas grâce à l'effet Wannier-Stark, mais grâce à l'effet Stark confiné. Leurs travaux sont présentés dans l'article :

"Optical bistable responses based on self elctro-optic effect in nonbiased asymmetric coupled quantum well p-i-n photodiode", Applied Physics Letters, 62 (20), 17 Mai 1993.

Par ailleurs, il est envisageable de réaliser des bistables "tout optique", c'est-à-dire ne nécessitant pas de circuit électrique auxiliaire, sur la base de phénomènes d'optique non linéaire pure. A cet égard, il est fait référence à:

- l'ouvrage "Optical bistability: controlling light by light" de H.M. GIBBS, Academic press, New York, 1985,

- l'article "De nouveaux dispositifs pour la commutation et la logique optiques", J.L. OUDAR, L'écho des recherches N° 134, Centre National d'Etudes des Télécommunications, 4° trimestre 1988

- l'article "Prospects for further threshold reduction in bistable microresonators", J.L. OUDAR, R. KUSZELEWICZ, B. SFEZ, J.C. MICHEL ET R. PLANEL, Optical and Quantum Electronics, 24, S 193 (1992).

Mais ces propositions de bistables tout optique relèvent pour beaucoup de la prospective. Si leur vitesse de commutation attendue est de l'ordre du Gigahertz au lieu du Mégahertz pour les SEED, par contre leur puissance spécifique de travail (en microwatts par micromètre carré de matériau) est très largement (plus de $10^4$ fois) supérieure à celles des SEED, ce qui paraît actuellement rédhibitoire.

Il reste alors, pour les SEED, le problème de leur circuit électrique annexe.

La présente invention vient apporter un élément de solution à ce problème.

Elle part de structures appelées "diodes PIN", en elles-mêmes bien connues, comportant une région électro-absorbante non dopée (ou Intrinsèque), comprise entre des couches de plus grandes bandes interdites et dopées respectivement de type N (ou N+) et P (ou P+). La région électro-absorbante est ici une suite de couches formant des puits quantiques (système de puits quantiques), lesquels réalisent de préférence une structure de type superréseau présentant l'effet Wannier-Stark.

En d'autres termes, le dispositif comporte:

- des couches de semiconducteur définissant une sur-structure PIN, dont la partie intrinsèque, qui comprend une suite de couches sensiblement non dopées formant un superréseau de puits quantiques, est capable, d'une part, de l'effet Wannier-Stark, et d'autre part, dans une plage du spectre, d'absorption optique dépendante du champ électrique,

- des moyens d'entrée de lumière pour admettre, dans la suite de couches à puits quantiques, une lumière de travail située dans ladite plage du spectre, ladite lumière de travail étant apte à photocréer, dans ladite structure PIN, des paires électron-trou, par absorption de photons, et

- des moyens de sortie pour recueillir ladite lumière après traversée de la suite de couches.

Dans une telle diode PIN, des charges électriques de signes opposés apparaissent de part et d'autre de la zone intrinsèque; il existe donc un champ électrique "auto-construit" dans cette zone intrinsèque.

Dans les applications connues, la diode PIN est conçue pour qu'on puisse la polariser en inverse, par un fort champ électrique, sans qu'un courant électrique ne la traverse. Habituellement, le champ électrique auto-construit n'est donc qu'une caractéristique secondaire et passive du composant. Et l'on utilise des structures où il est négligeable.

Le Demandeur a envisagé au contraire de s'en servir. Sous certaines conditions, qui apparaissent intéresser principalement le nombre, les natures et les géométries des couches formant les puits quantiques, il a observé une bistabilité optique sans circuit électrique extérieur.

Plus précisément, cette bistabilité se produit lorsque la suite de couches à puits quantiques réalisant le superréseau est capable de générer au repos un champ électrique auto-construit en raison de la différence de potentiel engendrée naturellement à ses bornes par la sur-structure PIN.

En l'état actuel des études, ceci semble devoir s'expliquer comme suit : l'effet combiné, sur les paires électron-trou photocréées dans la suite de couches à puits quantiques, dudit effet Wannier-Stark et dudit champ électrique auto-construit au repos, génère un effet d'auto-amplification des variations d'absorption de ladite suite.

D'autres caractéristiques et avantages de l'invention apparaîtront à l'examen de la description détaillée ci-après, et des dessins annexés, sur lesquels :

- la figure 1 illustre schématiquement un SEED de type connu;

- la figure 2 illustre schématiquement un SEED selon la présente invention;

- la figure 3 illustre schématiquement la structure semiconductrice dans laquelle l'effet selon la présente invention a été observé;

- la figure 4 est un diagramme schématique d'absorption en fonction de l'énergie du photon, correspondant à l'effet Stark confiné quantiquement;

- la figure 5 est un diagramme schématique d'absorption en fonction de l'énergie du photon pour l'effet Wannier-Stark;

- la figure 6 est un diagramme analogue à la figure 5, mais relatif à des mesures faites sur l'échantillon de la figure 3, pour plusieurs valeurs du champ électrique;

- la figure 7 illustre un dispositif expérimental utilisé selon la présente invention;

- la figure 8 illustre plusieurs lois d'absorption en fonction de la tension électrique appliquée pour différentes longueurs d'onde et différentes intensité de la lumière incidente;

- la figure 9 est une courbe de transmission différentielle obtenue à partir du dispositif expérimental de la figure 7;

- la figure 10 montre une série de courbes de puissance de sortie en fonction de la puissance d'entrée, illustrant l'effet de bistabilité optique obtenu selon la présente invention; et

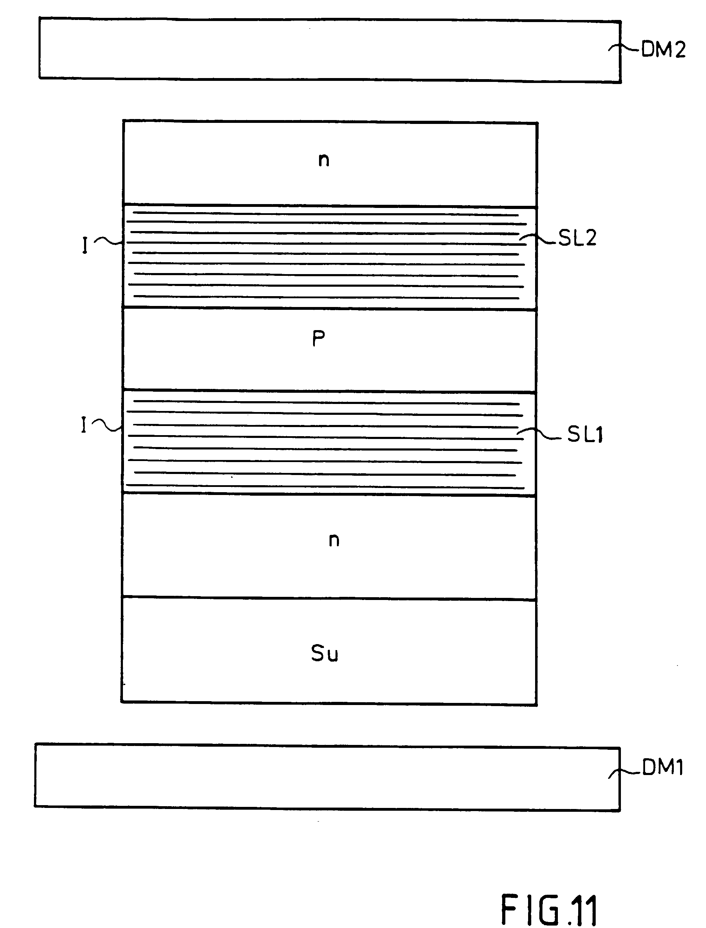

- le figure 11 montre une variante de réalisation du dispositif selon l'invention.

Les dessins annexés sont au moins en partie de caractère certain. En conséquence, ils font partie intégrante de la présente description. Ils pourront donc servir non seulement à mieux faire comprendre celle-ci, mais aussi contribuer à la définition de l'invention, le cas échéant.

Il est utile de faire d'abord quelques rappels de physique, et de terminologie (sachant que celle-ci n'est pas totalement stabilisée).

On sait empiler une suite de couches semiconductrices non dopées qui définissent des puits quantiques, ce que l'on appelle ici "système de puits quantiques".

Lorsque les puits sont isolés, c'est à dire pratiquement découplés les uns des autres, on parle souvent de "structure multi-puits quantiques", ou "structure à puits quantiques multiples", en omettant le mot "découplés".

On parle de "superréseau" lorsque les puits sont couplés les uns aux autres par l'effet tunnel résonnant, et qu'ils peuvent être assimilés à un système périodique. En principe, l'empilement de couches est lui-même périodique, avec un motif comprenant au moins une couche "puits" et au moins une couche "barrière". La période du superréseau, ou "superpériode", est égale à la somme des épaisseurs du puits et de la barrière.

L'effet tunnel transforme les niveaux d'énergie discrets qu'occupent les électrons de la bande de conduction (ou les trous de la bande de valence), dans des puits quantiques isolés, en "minibandes" qui sont des intervalles continus d'énergies permises (de largeur $D_e$, $D_t$). Ces minibandes sont à peu près centrées sur les niveaux discrets d'énergies qui existeraient si les puits étaient isolés, c'est-à-dire séparés par des barrières épaisses, comme dans une structure à puits quantiques multiples (découplés).

Par ailleurs, lorsqu'on diminue la longueur d'onde de la lumière incidente (lorsqu'on va du "rouge" vers le "bleu"), l'absorption optique d'un matériau semiconducteur passe de valeurs faibles à une valeur à peu près constante, dite palier ou continuum d'absorption. La zone de transition entre les valeurs faibles et le palier est souvent appelée "seuil d'absorption".

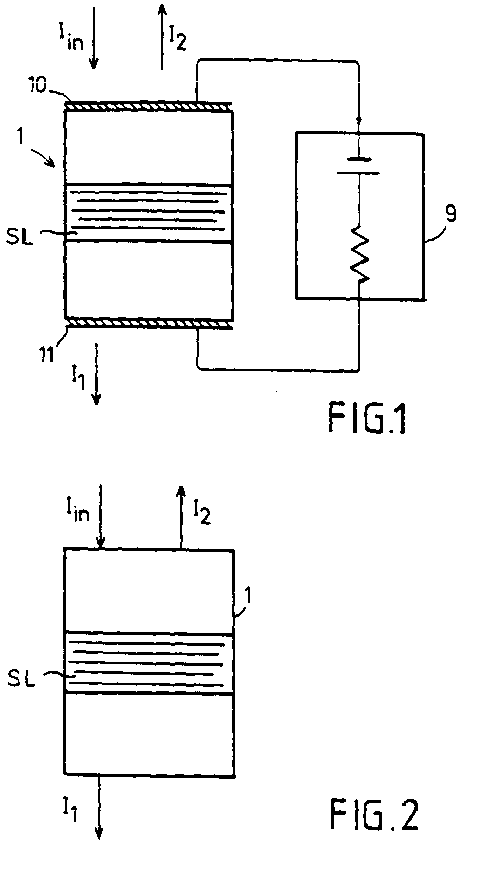

La figure 1 illustre un monocristal revêtu d'un empilement de couches, désigné généralement par la référence 1. Les couches sont obtenues par épitaxie. A l'intérieur de l'empilement, il est prévu une suite de couches à puits quantiques, qui peut être une structure à puits quantiques multiples, ou bien un superréseau. Le bloc semiconducteur est muni de connexions électriques 10 et 11 à ses extrémités, reliées à un circuit de charge 9 incluant une source de tension.

Telle est la structure générale des SEED connus.

Dans les SEED à "puits quantiques", reposant sur l'effet Stark confiné quantiquement, le pic d'absorption excitonique se manifeste entre la zone de transparence et le palier d'absorption du matériau. Il est associé à l'interaction électrostatique entre électron et trou, et considérablement renforcé par le caractère bidimensionnel des puits quantiques. Il est également plus important dans les matériaux de grande bande interdite. Sous champ électrique, il se déplace vers les basses énergies, d'abord proportionnellement au carré du champ, et à la puissance quatre de l'épaisseur du puits quantique. L'effet Stark confiné quantiquement est donc observable essentiellement dans des puits quantiques relativement larges et sous champ électrique relativement fort.

La région située au voisinage du maximum du pic excitonique est un domaine d'électro-absorption négative, qui est la base du fonctionnement bistable des SEED à puits quantiques.

On considère maintenant les SEED à superréseaux, utilisant l'effet Wannier-Stark.

Sous champ électrique, le spectre d'absorption d'un superréseau est formé d'une succession de "marches d'escalier" situées aux énergies $E_0 + p\, eFd$, d'où $E_0$ est l'énergie du seuil d'absorption qu'auraient les puits quantiques s'ils étaient isolés (c'est-à-dire séparés par des barrières épaisses), p est un nombre entier relatif, e la charge électrique élémentaire, F l'amplitude du champ électrique et d la période du superréseau. La transition à l'énergie $E_0$, qui domine à fort champ électrique, est appelée "transition verticale", et les transitions satellites situées de part et d'autre, correspondant à p=±1, p=±2, etc., sont appelées "transitions obliques".

Lorsque le champ tend vers zéro, ces transitions composent le "spectre de minibande", qui montre une absorption progressive sur un intervalle spectral de largeur $D_{opt}$ égale à la somme des largeurs des minibandes fondamentales de conduction (d'électron) $D_e$ et de valence (de trou) $D_t$. Lorsque le champ électrique augmente, les transitions obliques s'écartent de la transition verticale et leur intensité oscille d'abord puis tend vers zéro à fort champ électrique.

La région comprise entre $E_0$ et $E_0 - D_{opt}/2$ est un domaine d'électro-absorption négative particulièrement intéressant, mais il est notable que les oscillations de l'intensité des transitions obliques produisent également des régions d'électro-absorption négative.

On s'intéresse maintenant au traitement de signal à l'aide de SEED (Figure 1).

Le signal à traiter est représenté par l'intensité d'un faisceau de lumière, de longueur d'onde choisie, qui traverse la structure SL. La lumière incidente, porteuse de signal, est d'intensité $I_{in}$. La lumière de sortie, d'intensité $I_{out}$, peut être obtenue soit par transmission (I1), soit par réflexion (I2), sous réserve d'un aménagement convenable du matériau semiconducteur.

On sait que, pour une valeur fixe du coefficient d'absorption, l'effet de l'absorption sur la lumière incidente est linéaire. $I_{out}$ est proportionnel à $I_{in}$.

L'absorption A est fonction de la longueur d'onde lumineuse w et du champ qui règne, ou de la tension électrique V qui correspond à ce champ:

$$A = A(V,w) \qquad (I)$$

La bistabilité optique d'un système suppose que la réponse du système soit non-linéaire, par exemple ici que l'absorption dépende de l'intensité lumineuse incidente. A noter que cette condition n'est pas suffisante, comme on le verra plus loin.

La bistabilité d'un SEED résulte de la combinaison d'un effet d'absorption électro-optique (dépendante du champ électrique) et d'une contre-réaction fournie par un circuit électrique. Dans sa version la plus élémentaire, ce circuit peut être une simple résistance de charge, en série sur une source de tension. Il existe de nombreuses versions du circuit de charge 9, mais la caractéristique commune à tous les SEED connus est la présence d'un circuit extérieur fermé.

Dans les SEED connus, il est requis que l'absorption optique augmente lorsqu'on diminue le champ électrique dans la structure, ou la tension électrique aux bornes de la structure, comme exprimé par la relation:

$$dA/dV < 0 \qquad (II)$$

A une longueur d'onde donnée, on a:

$$I_{out} = \exp(-A(V)) \cdot I_{in} \qquad (III)$$

soit, au premier ordre:

$$I_{out} \approx (1 - A(V)) \cdot I_{in} \qquad (IIIA)$$

Ceci vaut pour des intervalles choisis de longueurs d'onde optique, de champ électrique, d'intensité de la lumière incidente, et de temps, qui, ensemble, définissent un "domaine d'électro-absorption négative".

On utilise donc un domaine d'électro-absorption négative, et une contre-réaction électrique positive (bien qu'il soit envisageable d'observer une bistabilité avec un domaine d'électro-absorption positive et une contre-réaction électrique négative - par résistance négative).

Le paramètre temps, qui régit la vitesse à laquelle on peut faire fonctionner le composant bistable, est une variable indépendante.

Par ailleurs, l'intensité lumineuse absorbée et le champ électrique sont reliés par le phénomène d'écrantage.

On peut donc considérer simplement le domaine d'électro-absorption négative comme défini par une plage du spectre optique et un intervalle de champ électrique.

Dans un SEED, l'apparition (état initial) d'une absorption de la lumière incidente va entraîner la création d'une paire électron-trou pour chaque photon absorbé. Une partie de ces paires électron-trou intervient pour diminuer le champ électrique, ce qui, par contre-réaction, entraîne l'augmentation de l'absorption optique, et ainsi de suite. D'où une augmentation auto-entretenue de l'absorption, jusqu'à atteindre la limite du domaine d'électro-absorption négative (état final).

Les équations générales du fonctionnement sont:

$$F = f(V) \; ; \; A = g(F) \; ; \; V = h(A) \qquad (IV)$$

Elles expriment que:

- le champ électrique F et la tension V sont reliés par une fonction f(), qui est monotone, et ne dépend que de la structure semiconductrice utilisée ;
- l'absorption est une fonction g() du champ électrique F, qui, elle aussi, ne dépend que de la structure semiconductrice utilisée ;
- La tension V est une fonction h() de l'absorption, à cause du phénomène d'écrantage. Dans les SEED connus, la tension V est également fonction des caractéristiques du circuit électrique auxiliaire, chargé d'assurer la contre-réaction positive précitée.

On appelle contraste d'absorption l'écart relatif d'absorption Dra entre l'état final A2 et l'état initial A1, et de même pour l'écart relatif de transmission Drt, avec:

$$Dra = (A2-A1)/A1 \; ; \; Drt = (T2-T1)/T1 \qquad (V)$$

Le SEED est d'autant plus utilisable que son contraste d'absorption Dra est plus grand.

L'usage de composants optiques en traitement de signal a, entre autres intérêts, l'avantage que l'on peut facilement éviter les interférences entre composants voisins, et par conséquent éviter les effets de "diaphonie" dans un système à composants multiples.

Le fait d'y ajouter des circuits électriques est pénalisant, en termes de temps de réponse, à cause du produit résistance x capacité du circuit.

Mais le plus intéressant serait de réaliser des matrices bidimensionnelles d'éléments optiques de traitement de signal. Ces matrices sont susceptibles de différentes applications, dont un traitement massivement parallèle de l'information (traitement d'image, transformée de Fourier rapide, entre autres).

Or il est clair que la nécessité de prévoir des circuits électriques tels que le circuit 9 de la figure 1 pose un problème considérable lorsqu'il s'agit de réaliser des matrices de composants optiques utilisant des effets électro-optiques, à l'aide des SEED connus.

Comme on le comprendra mieux plus loin, la présente invention a pour but de fournir un composant optique selon la figure 2, c'est-à-dire uniquement constitué de la structure semiconductrice 1, sans nécessiter de circuit électrique complémentaire.

Dans ce cas, la tension aux bornes du superréseau est exprimée par les relations suivantes, qui sont réciproques l'une de l'autre:

$$V = V_0 \; ( \; 1 - \exp(-g.A.I_{in}) \; ) \qquad (VI)$$

$$A = 1/(g.I_{in}) \cdot \ln(V_0/(V_0-V)) \qquad (VII)$$

Dans ces relations, le paramètre g est un facteur de qualité du superréseau, relié à sa conductivité résiduelle: le matériau semiconducteur intrinsèque du superréseau est plutôt isolant; on peut dire schématiquement que, parmi les paires électrons-trous créées par la lumière absorbée, certaines sont "court-circuitées" par la conductivité résiduelle du superréseau; seules celles qui ne sont pas court-circuitées font varier la tension aux bornes et le champ électrique.

En l'absence de circuit électrique auxiliaire, la tension aux bornes du superréseau (et le champ électrique dans celui-ci) dépend seulement des caractéristiques du superréseau, en termes d'absorption optique et de conductivité résiduelle, et bien entendu de l'intensité de la lumière incidente.

Jusqu'à présent, une contre-réaction positive externe était considérée comme nécessaire pour obtenir la bistabilité électro-optique. A cet effet, la diode PIN était polarisée de manière contrôlée par le circuit électrique extérieur; et cette polarisation était en inverse, pour éviter que cette diode PIN, y compris sa partie intrinsèque (le superréseau), ne devienne franchement conductrice.

De façon a priori inattendue, le Demandeur a observé une bistabilité électro-optique, sans circuit électrique extérieur, sur la seule base du champ électrique auto-construit dans la diode PIN, et de son écrantage par les paires électron-trou photo-créées.

Il est précisé que le champ auto-construit se manifeste aux bornes de la partie isolante ou intrinsèque de la diode PIN, bornes entre lesquelles existe une différence de potentiel. Par contre, la différence de potentiel aux bornes de la diode PIN est nulle.

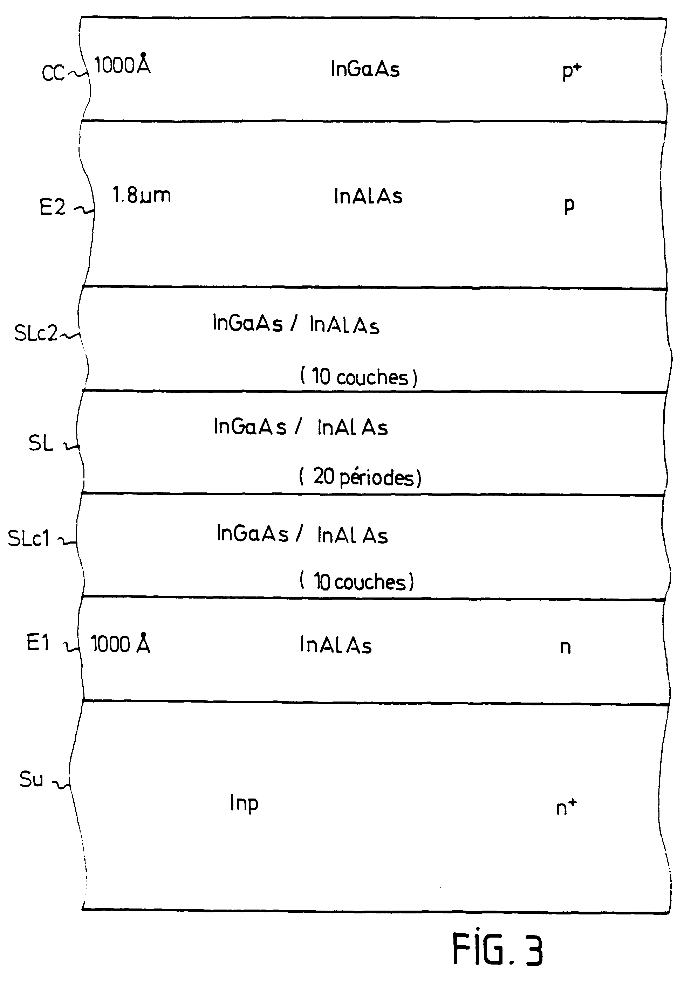

Les observations qui sont à la base de la présente invention ont été faites à partir d'hétérostructures semiconductrices du type défini sur la figure 3, et dont la composition est la suivante:

- Substrat Su en InP de type N+, dopé à environ $2.10^{18}$ cm$^{-3}$
- une couche dopée E1, en InAlAs de type N, dopé à environ $5.10^{17}$ cm$^{-3}$, d'épaisseur 0,1 μm,
- premier superréseau de confinement SLc1, formé de 10 paires de couches InGaAS/InAlAS (25Å/30Å),
- superréseau électro-absorbant, formé de 20 paires de couches InGaAS/InAlAS (60Å/20Å),
- second superréseau de confinement SLc2, formé de 10 paires de couches InGaAS/InAlAS (25Å/30Å),
- une couche dopée E2, en InAlAs de type P, dopé à environ $5.10^{17}$ cm$^{-3}$, sur une épaisseur de 1,8 μm,
- une couche de contact CC, en InGaAs de type P+, dopée à environ $2.10^{19}$ cm$^{-3}$, d'épaisseur 0,1 μm.

Ces dispositifs ont été fabriqués par épitaxie par jet moléculaire, ou MBE (Molecular Beam Epitaxy).

Cette hétérostructure est susceptible d'opérer en guide d'onde. C'est la raison pour laquelle deux superréseaux de confinement SLc1 et SLc2 sont prévus de part et d'autre du superréseau actif SL, afin de définir le mode optique en onde guidée, lorsque la lumière se propage dans le plan des couches. Ces deux superréseaux de confinement n'ont pas de rôle actif dans le composant bistable décrit, qui peut être réalisé sans eux.

Les couches dopées E1 et E2 présentes dans l'échantillon utilisé définissent la diode PIN. Elles permettront également la mesure des spectres d'électro-absorption en fonction de la tension appliquée à l'aide d'un circuit extérieur (utilisé seulement à cet effet).

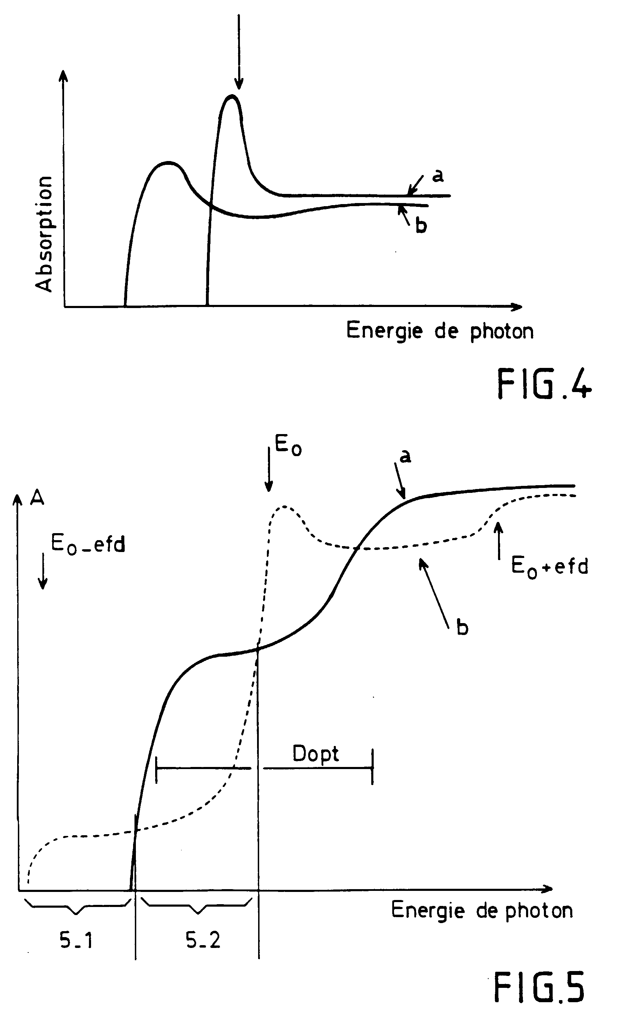

Il est maintenant fait référence à la figure 4, qui décrit l'absorption d'une structure à puits quantiques multiples, à raison de l'effet Stark confiné quantiquement, pour deux valeurs différentes a et b du champ électrique. La courbe a correspond à un champ électrique pratiquement nul. La courbe b correspond à un champ électrique "fort" (pour l'effet Stark confiné quantiquement, champ "fort" signifie que le déplacement de la transition excitonique par l'effet Stark est plus grand que la largeur de cette transition.)

La figure 4 montre qu'en présence d'un champ électrique, le pic excitonique (qui marque le début de la courbe d'absorption) se déplace vers les basses énergies.

En conséquence, pour une longueur d'onde de travail qui est située au maximum de ce pic à champ électrique nul, il apparaît que l'absorption va diminuer lorsqu'on applique un champ électrique fini, d'où l'électro-absorption négative.

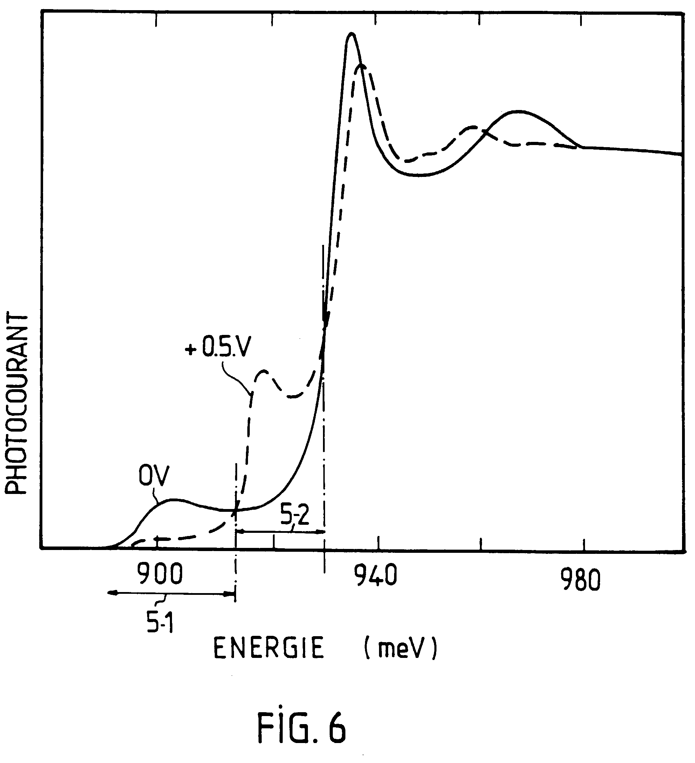

Bien qu'il soit envisageable de mettre en oeuvre la présente invention en utilisant l'effet illustré sur la figure 4, le Demandeur préfère actuellement utiliser celui que l'on va maintenant décrire en référence à la figure 5.

Il s'agit de l'effet Wannier-Stark (bien que le mot "Stark" figure dans les noms des deux effets, il doit être clair que ces deux effets sont franchement différents l'un de l'autre).

La figure 5 montre le spectre d'absorption de minibande à champ nul, qui se transforme à fort champ électrique en une transition "verticale", dont l'énergie est nettement supérieure à celle du seuil d'absorption en l'absence de champ, et qui est accompagnée de transitions "obliques" correspondant à p=±1. La distance de ces transitions obliques à la transition verticale permet d'ailleurs de mesurer directement la valeur du champ électrique à l'intérieur du superréseau. La région 5-2 entre la transition verticale et le seuil d'absorption à champ nul est un domaine d'électro-absorption négative, tandis que, pour le même intervalle de champ électrique, la région 5-1 est un domaine d'électro-absorption positive. Le régime de fort champ électrique, pour l'effet Wannier-Stark, correspond à la condition:

$$e.F.d \geq D_{opt}.$$

Outre leur différence qualitative, les effets Stark et Wannier-Stark se manifestent dans des régimes assez différents de paramètres des structures à puits quantiques. L'homme de métier sait calculer précisément les propriétés électroniques d'une structure à puis quantiques multiples et déterminer s'il s'agit d'un "multi-puits quantique" ou d'un "superréseau".

Pour fixer les idées, et bien que les chiffres puissent varier quelque peu selon le système de matériaux considérés, l'effet Stark est une propriété qui se manifeste bien dans des puits "larges" (typiquement, au moins 100Å environ), séparés par des barrières "larges" (typiquement, 70 Å ou plus). Au contraire, l'effet Wannier-Stark est observé dans des structures à puits "étroits" (typiquement, 60Å ou moins) couplés entre eux par l'effet tunnel à travers des barrières étroites (typiquement, 40Å ou moins).

Le couplage entre puits, qui est la plus importante caractéristique d'un superréseau, est mesuré par la largeur de la minibande d'absorption fondamentale:

$$D_{opt} = D_e + D_t \qquad (VIII)$$

qui dépend principalement (et très rapidement) de la somme des épaisseurs des puits et des barrières, c'est-à-dire de la superpériode. Il est rappelé que les (mini)bandes de conduction et valence sont séparées par l'énergie de bande interdite ou "gap" $E_g$. A champ électrique nul, le gap du puits quantique isolé est $E_0$, et le gap du superréseau $E_0 - D_{opt}/2$. Il est également rappelé que la structure de bande complète du superréseau peut comporter d'autres minibandes, à des énergies plus élevées, mais qui n'ont pas d'intérêt pratique car elles contribuent au spectre d'absorption dans un domaine spectral où le superréseau est déjà assez fortement absorbant : il est donc entendu que les caractéristiques données ici se réfèrent aux minibandes fondamentales de conduction et de valence. Suivant les matériaux considérés, la minibande de valence fondamentale peut être la première minibande de trou lourd (cas le plus usuel) ou la première minibande de trou léger (ce cas se rencontre avec des systèmes dits à "couches contraintes", dans lesquels on associe des matériaux dont les paramètres de maille cristalline sont compatibles, mais différents).

Dans la plupart des cas, la largeur de la minibande de conduction $D_e$ est la principale contribution à $D_{opt}$, avec

$$D_{opt} \approx D_e \qquad (VIIIA)$$

Ainsi, si Dopt est de l'ordre de 5 à 10 milli-électron-Volts (meV) ou moins, on est en présence d'une structure à puits quantiques multiples, non couplés, sujette seulement à l'effet Stark.

Si Dopt est nettement supérieure à 10 meV, typiquement 30 à 100 meV, on est en présence d'un superréseau, capable de manifester l'effet Wannier-Stark.

Des SEED à superréseaux ont été proposés par les publications citées en troisième lieu au début de la présente description. Mais ils sont tous tributaires d'un circuit électrique extérieur, comme illustré sur la figure 1.

La figure 6 illustre de façon plus détaillée la loi d'absorption (en unités arbitraires) en fonction de la fréquence lumineuse, ou de l'énergie des photons (en milli-électronvolts), pour une structure du type de celle illustrée sur la figure 3.

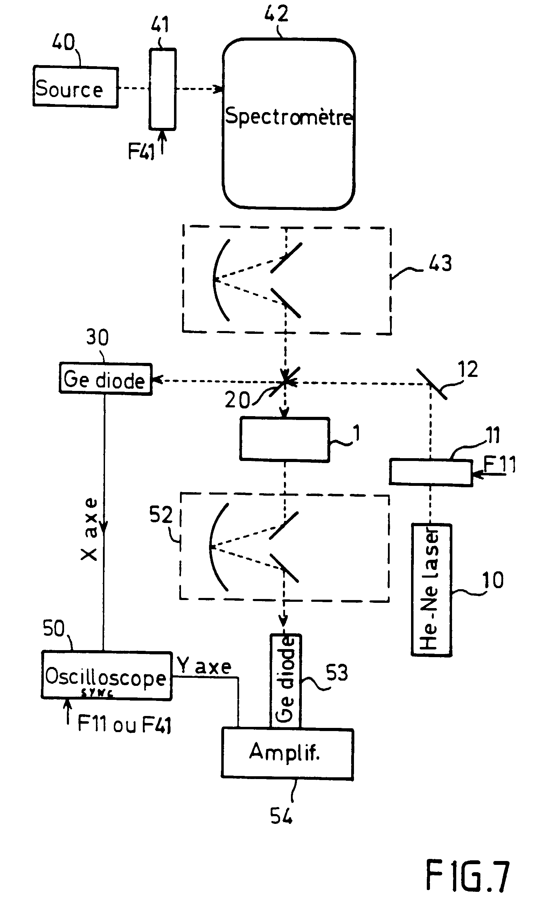

Sur la figure 7, l'échantillon 1 est un dispositif semi-conducteur comportant un superréseau, en l'espèce celui de la figure 3.

Un laser hélium-néon 10 fournit une lumière IP, dite lumière de polarisation, à un hacheur ou "chopper" 11, suivi d'un miroir de renvoi 12.

Une autre source de lumière 40 est formée par une lampe à spectre étendu (ici, une lampe halogène). Cette lumière traverse un autre hacheur 41. Elle est appliquée ensuite à un monochromateur 42, dont la sortie est une lumière de travail I0. L'intensité de cette lumière de travail I0 est contrôlée par l'alimentation électrique de la lampe, tandis que sa longueur d'onde est sélectionnée à l'aide du monochromateur. Le hacheur 41 permet de faire des mesures en "détection synchrone". Un montage optique de focalisation 43, constitué de deux miroirs de renvoi à 45° et d'un miroir convergent, amène la lumière de travail I0 ainsi obtenue sur la lame semi-réfléchissante 20.

La lame semi-réfléchissante 20 réfléchit une partie de la lumière de polarisation IP, qui est focalisée sur l'échantillon 1. Elle transmet une partie de la lumière de travail I0, qui, de même, est focalisée sur l'échantillon 1.

Le reste de la lumière de polarisation traverse la lame 20. Le reste de la lumière de travail est réfléchi par la lame 20. Ces deux lumières sont envoyées sur une photo-diode au Germanium 30, assurant ainsi la mesure de l'intensité incidente, et dont le signal électrique détecté est appliqué à la voie X d'un oscilloscope 50 (ou d'une table traçante, non représentée).

La lumière de sortie I1 de l'échantillon est appliquée à un autre dispositif de focalisation 52, de même structure que le premier, suivi d'une photo-diode au germanium de détection 53, et d'un amplificateur 54, dont la sortie est appliquée comme axe Y à l'oscilloscope 50 (ou de la table traçante).

Les hacheurs 11 et 41 sont réalisés par exemple par volet tournant, avec des cadences respectives F11 et F41, dont la synchronisation est transmise à l'entrée adéquate de l'oscilloscope 50.

L'homme du métier comprendra que cet appareillage permet de réaliser:

-    soit une mesure de la transmission absolue (avec ou sans la lumière de polarisation, sous le contrôle en tout ou rien du hacheur 11), tandis que la lumière de travail issue du monochromateur est hachée,

-    soit une mesure de la transmission différentielle, c'est à dire de l'effet de la lumière de polarisation, celle-ci étant modulée par le hacheur 11, tandis que la lumière de travail n'est plus modulée.

Les lumières IP et I0 ne sont pas nécessairement à la même longueur d'onde.

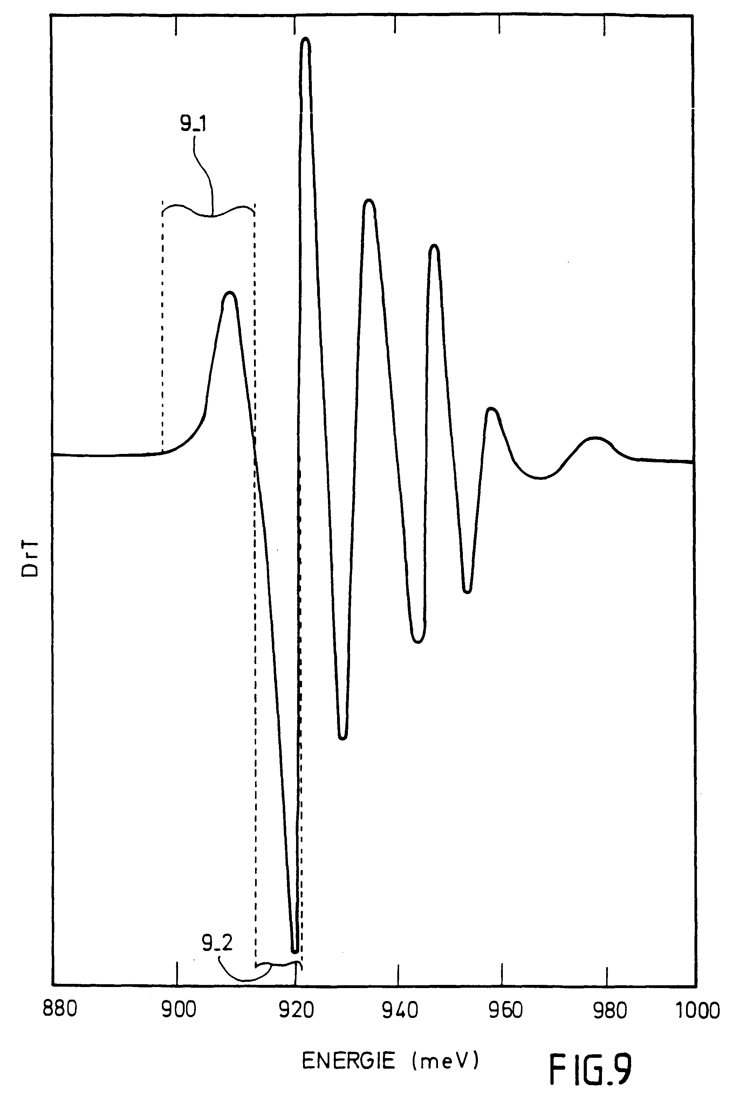

Dans l'expérience menée, l'électro-absorption est négative lorsque la polarité des oscillations observées sur la figure 9 est négative. Ainsi, la partie 9-1 de la courbe correspond sensiblement à la zone 5-1 des figures 5 et 6. La partie 9-2 de la courbe correspond à la zone 5-2 des figures 5 et 6.

Les autres oscillations correspondent aux autres effets dûs à la variation du champ électrique induite par la lumière de polarisation: variation de l'intensité de la transition excitonique, transitions supérieures de l'effet Wannier-Stark, notamment. Ces effets sont considérés actuellement comme de faible intérêt pratique, car ils se situent dans un domaine spectral où l'échantillon est assez fortement absorbant.

Ces observations, réalisées à basse température, montrent que l'effet de bistabilité optique est susceptible d'être obtenu dans un composant semiconducteur du type superréseau sans nécessiter d'appliquer un champ électrique, puisqu'ils mettent en évidence une forte non linéarité, qui permet une contre-réaction positive.

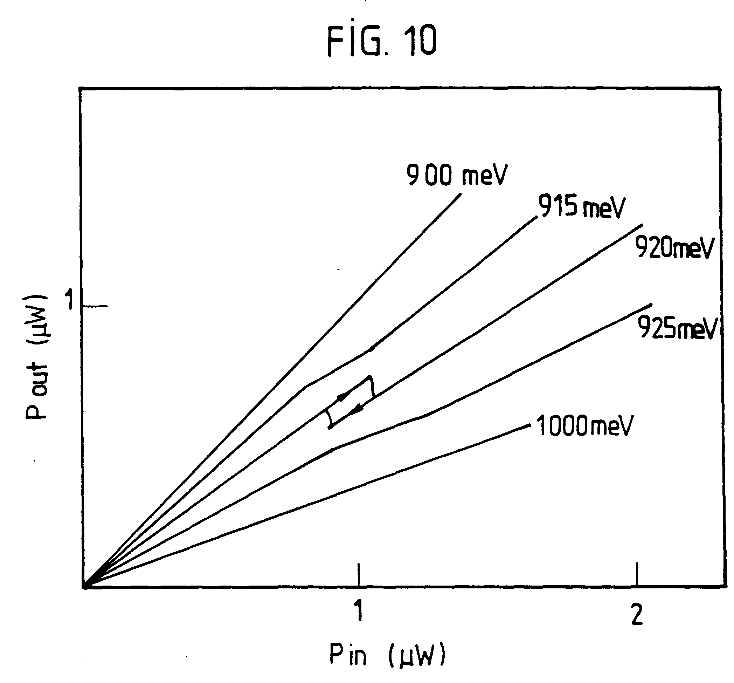

La figure 10 le montre plus clairement, en illustrant la puissance de sortie en fonction de la puissance d'entrée, obtenue dans les mêmes conditions.

Il apparaît clairement au centre de la figure 10 un cycle d'hystérésis, caractéristique d'un système bistable: lorsque l'on décroit l'intensité de la lumière de travail appliquée à la structure, la loi de puissance lumineuse sortie/entrée n'est pas la même qu'à l'aller. En d'autres termes, le champ électrique revient à son état initial avec une loi différente de celle de l'aller.

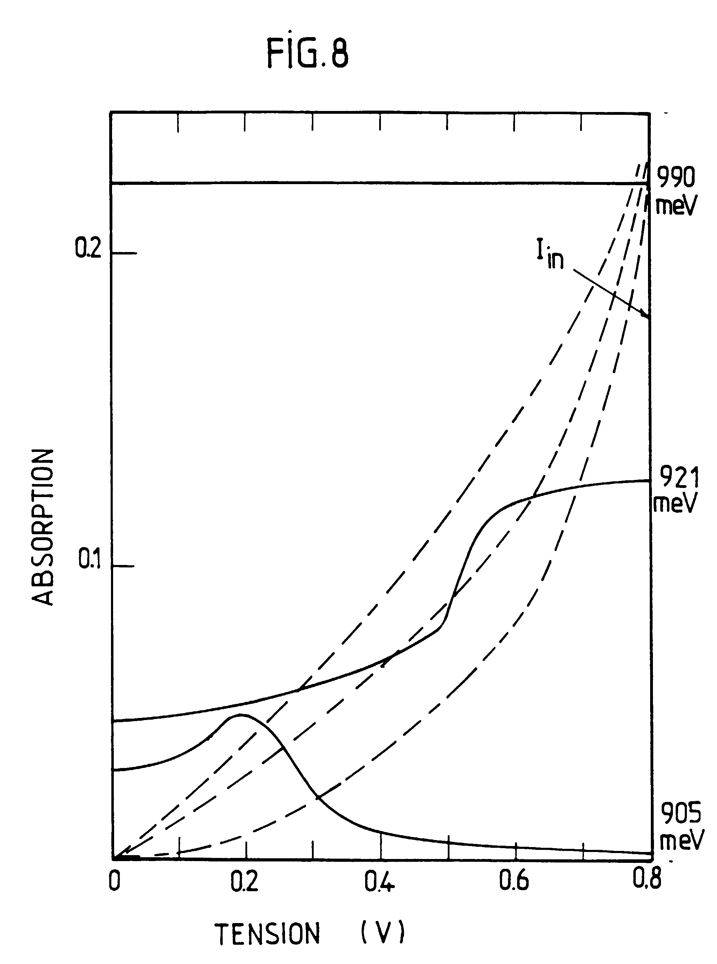

La figure 8 montre l'analyse du régime de fonctionnement du dispositif. Les courbes en trait continu montrent les variations mesurées de l'absorption optique en fonction de la tension appliquée (tension appliquée dans le sens direct, qui tend donc à compenser le champ électrique auto-construit), et ce pour trois énergies de photons différentes:

- 905 meV, plage spectrale 5-1 des figures 5 et 6;
- 921 meV, plage spectrale 5-2 des figures 5 et 6; et
- 990 meV, dans la région du plateau d'absorption.

Par ailleurs, les courbes tiretées montrent les "lignes de charge" obtenues à l'aide des relations (VI) et (VII), qui relient la tension, donc le champ électrique, à l'absorption optique A, et à l'intensité incidente Iin.

Pour l'énergie du photon 921 meV, et pour une valeur adéquate de l'intensité incidente (courbe tiretée intermédiaire), il existe trois points d'intersection. Pour des valeurs plus fortes ou plus faibles de l'intensité incidente, il n'y a qu'un point d'intersection.

L'homme de métier comprendra que s'il n'existe qu'un point d'intersection, celui-ci correspond à un régime de fonctionnement stable.

Par contre, dans le cas de trois points d'intersection, seuls les deux points extrêmes correspondent à des régimes de fonctionnement stables. Le point milieu est instable, et ne correspond donc pas à un régime de fonctionnement réel. Le cas de trois points d'intersection apparaît correspondre au fonctionnement bistable observé dans la boucle d'hystérésis de la figure 10.

Les expériences correspondant aux figures 6, et 8 à 10 ont été menées à la température de l'hélium liquide (2° K), mais le Demandeur a également observé un comportement bistable équivalent à la température de l'azote liquide (77° K). Le dispositif selon l'invention présente la particularité de se contenter d'une puissance de maintien de l'ordre du microwatt par mm$^2$, ce qui est exceptionnellement bas.

Par ailleurs, des mesures du signal de transmission différentielle effectuées à température ambiante montrent qu'une modulation équivalente du coefficient d'absorption peut être obtenue, au prix d'une puissance optique sensiblement supérieure. Il est donc estimé que les mêmes structures montrent le comportement bistable à température ambiante, dans un régime de plus forte intensité optique.

Il est difficile de quantifier exactement les conditions que le superréseau doit satisfaire, pour manifester l'effet selon l'invention. Cependant, le Demandeur a observé que les superréseaux ont toutes chances de présenter cet effet s'ils satisfont la condition de la relation:

$$E_g/(N.D_{opt}) \text{ un peu supérieur à 1 environ} \qquad (IX)$$

dans laquelle:

- $E_g$ est l'énergie de bande interdite du superréseau,
- $N$ est le nombre de puits quantiques du superréseau, et
- $D_{opt}$ est la largeur de bande optique du superréseau.
- s'agissant de grandeurs physiques mesurées indirectement ($D_{opt}$ notamment), le mot "environ" implique une marge d'au moins 30 %.

Cette condition exprime le fait que le champ auto-construit (correspondant à une tension $E_g$ aux bornes du superréseau) est suffisant pour placer le superréseau dans la limite "champ fort" de l'effet Wannier-Stark.

De préférence, le rapport $Eg/(N.D_{opt})$ demeure inférieur à 3 environ, car il intervient une saturation à fort champ électrique.

Ceci n'exclut pas que des structures à puits quantiques multiples choisies de sorte que le champ auto-construit corresponde à la limite "champ fort" de l'effet Stark confiné quantiquement seraient également de bons candidats pour la réalisation de bistables sans contact électrique, selon l'invention. De même, il est notable que les oscillations d'intensité des transitions obliques observées à plus faible champ, et à des longueurs d'ondes différentes, sont aussi susceptibles de provoquer un comportement bistable, éventuellement dans des superréseaux qui ne vérifieraient pas la condition susmentionnée.

Il est clair que cette condition implique une limitation assez sévère du nombre de périodes du superréseau (typiquement N≤20), ce qui limite l'absorption maximum possible, et donc le contraste de transmission qui peut être obtenu. C'est pourquoi il est important de noter que ce dispositif est susceptible d'être "empilé" pour former par exemple des structures du type N-I-P-I-N ..., où l'on en fait plusieurs diodes PIN de sens opposés, dont les absorptions s'additionnent. Ces structures, qui pourraient comporter jusqu'à une dizaine de diodes empilées, n'ont rien à voir avec les superréseaux dits NIPI, qui possèdent des paramètres sensiblement différents et font appel à des concepts physiques tout à fait distincts. La figure 11 en illustre un exemple simple avec deux diodes et deux superréseaux électro-absorbants SL1 et SL2.

Par ailleurs, il est concevable d'utiliser le même dispositif dans une configuration "onde guidée", où la lumière de travail se propage dans le plan des couches. Dans ce cas, il n'y a pas de limitation au contraste de transmission, mais le dispositif se prête dans ce cas beaucoup moins bien à un agencement en matrices de grande taille. La configuration verticale est donc préférée.

Par ailleurs, bien que le contraste d'absorption obtenu soit déjà remarquable, il peut encore être amélioré en logeant la structure semiconductrice dans une cavité Fabry-Pérot pour la longueur d'onde de la lumière de travail, comme décrit dans l'article déjà cité:

- "Normally-off high contrast asymmetric Fabry-Perot reflection modulator using Wannier-Stark localization in a superlattice", K.-K. Law et al., Applied Physics Letters, 56 (19), 7 Mai 1990.

Les moyens d'entrée de lumière appliquent la lumière de travail à l'une des extrémités de cette cavité, qui n'est pas nécessairement asymétrique. Du fait que le dispositif proposé n'a pas besoin de couches électrodes, la réalisation des miroirs de la cavité DM1 et DM2 (figure 11) est considérablement simplifiée: il n'est pas nécessaire de recourir à des miroirs à couches "multisemiconducteur", alors que c'était nécessaire en cas de circuit électrique extérieur.

La présente invention n'est pas limitée aux modes de réalisation décrits. Par ailleurs, l'interprétation physique donnée ci-dessus des phénomènes observés correspond à la meilleure analyse actuelle du Demandeur. Elle ne saurait cependant être utilisée pour limiter la portée de l'invention, qui peut s'appliquer à tous les types de structure et d'effet mentionnés, ou envisageables avec des SEED.

Sur un autre plan, le Demandeur a observé que l'effet Wannier-Stark se manifeste dans la quasi-totalité des matériaux, alors que l'effet Stark confiné quantiquement se manifeste essentiellement dans les matériaux de grande largeur de bande interdite ("gap"), où les porteurs sont excités. C'est là une des raisons pour lesquels on préfère actuellement mettre en oeuvre l'invention avec des superréseaux, plutôt qu'avec des "SEED à puits quantiques (découplés)".

**Revendications**

1. Dispositif semiconducteur doué de bistabilité optique, du type comprenant:

 - des couches de semiconducteurs (1) définissant une surstructure PIN, dont la partie intrinsèque (I), qui comprend une suite de couches formant un superréseau de puits quantiques (SL), est capable, d'une part, de l'effet Wannier-Stark, et d'autre part, dans une plage du spectre, d'absorption optique dépendante du champ électrique,

 - des moyens d'entrée de lumière pour admettre, dans la suite de couches à puits quantiques, une lumière de travail située dans ladite plage du spectre, ladite lumière de travail étant apte à photocréer, dans ladite structure PIN, des paires électron-trou, par absorption de photons, et

 - des moyens de sortie pour recueillir ladite lumière après traversée de la suite de couches (SL),

 caractérisé en ce que le nombre, les natures et les géométries des couches de la suite (SL) de couches à puits quantiques du superréseau sont choisis de sorte que le superréseau est capable de générer au repos un champ électrique auto-construit en raison de la différence de potentiel engendrée naturellement à ses bornes par la sur-structure PIN,

 et en ce que l'effet combiné, sur les paires électron-trou photocréées, dudit effet Wannier-Stark et dudit champ électrique auto-construit au repos, génère un effet d'auto-amplification des variations d'absorption de ladite suite (SL),

 ce qui procure un effet bistable "tout optique", sans nécessité de recourir à un circuit électrique actif ou passif extérieur.

2. Dispositif selon la revendication 1, caractérisé en ce que le nombre, les natures et les géométries des couches sont choisis pour que l'amplitude du champ électrique auto-construit se situe, au repos, dans la zone à fort champ électrique d'un domaine d'électro-absorption négative que possède la suite de couches à puits quantiques (SL), à la longueur d'onde de la lumière de travail.

3. Dispositif selon la revendication 2, caractérisé en ce que le domaine d'électro-absorption négative est dû au déplacement des transitions obliques de l'effet Wannier-Stark en fonction du champ électrique.

4. Dispositif selon l'une des revendications 2 et 3, caractérisé en ce que le superréseau (SL) satisfait la condition:

 $Eg / N. D_{opt}$ un peu supérieur à 1 environ, où:

 - Eg est l'énergie de bande interdite du superréseau,

- N est le nombre de puits quantiques du superréseau, et
- $D_{opt}$ est la largeur de bande optique du superréseau.

5. Dispositif selon la revendication 4, caractérisé par la condition Eg / N. $D_{opt}$ inférieur à 3 environ.

6. Dispositif selon l'une des revendications précédentes, caractérisé en ce que la lumière de travail est sensiblement perpendiculaire aux couches, ce qui permet un agencement en matrices de grandes dimensions.

7. Dispositif selon la revendication 6, caractérisé en ce que les couches semiconductrices comprennent au moins deux suites de couches (SL1, SL2) formant superréseau à effet Wannier-Stark, encadrées par des couches formant avec elles au moins deux sur-structures PIN alternées.

8. Dispositif selon la revendication 6, caractérisé en ce que les couches semiconductrices sont logées dans une cavité Fabry-Pérot (DM1, DM2) pour la longueur d'onde de la lumière de travail, tandis que les moyens d'entrée de lumière appliquent la lumière de travail à une première extrémité de cette cavité, et les moyens de sortie recueillent ladite lumière à une seconde extrémité sensiblement en regard de la première extrémité.

9. Procédé de traitement de signal, dans lequel :

   a) on engendre une lumière de travail ($I_{in}$), de longueur d'onde choisie, et dont l'amplitude est représentative d'un signal,

   b) on prévoit un empilement (1) de couches de semiconducteur définissant une sur-structure PIN, dont la partie intrinsèque (I), qui comprend une suite de couches formant un superréseau de puits quantiques (SL), est capable, d'une part, de l'effet Wannier-Stark, et d'autre part, d'absorption optique dépendante du champ électrique, dans une plage du spectre incluant ladite longueur d'onde choisie, et

   c) on applique la lumière de travail ($I_{in}$) à l'entrée de la sur-structure PIN, pour photocréer dans la suite de couches à puits quantiques (SL), par absorption de photons, des paires électron-trou,

caractérisé en ce que le nombre, les natures et les géométries des couches de la suite (SL) de couches à puits quantiques du superréseau sont choisis de sorte que le superréseau est capable de générer au repos un champ électrique auto-construit en raison de la différence de potentiel engendrée naturellement à ses bornes par la sur-structure PIN,

   et en ce que l'effet combiné, sur les paires électron-trou photocréées, dudit effet Wannier-Stark et dudit champ électrique auto-construit au repos, génère un effet d'auto-amplification des variations d'absorption de ladite suite (SL),

   de sorte qu'à la mise en oeuvre de l'étape c), il apparaît une région d'hystérésis dans la courbe de réponse de l'intensité de de la lumière en sortie de la sur-structure PIN en fonction de l'intensité de la lumière de travail à l'entrée de ladite sur-structure PIN.

10. Procédé selon la revendication 9, caractérisé en ce que le nombre, les natures et les géométries des couches sont choisis pour que l'amplitude du champ électrique auto-construit se situe, au repos, dans la zone à fort champ électrique d'un domaine d'électro-absorption négative que possède la suite de couches à puits quantiques (SL), à la longueur d'onde de la lumière de travail.

**Patentansprüche**

1. Reine optische bistabile Vorrichtung des Typs, der umfaßt:

   - Halbleiterschichten (1), eine PIN-Struktur definierend, deren intrinsischer Teil (I), der eine Folge von Schichten enthält, ein Supergitter von Potential- bzw. Quantentöpfen (SL) bildend, einerseits fähig ist zum Wannier-Stark-Effekt und andererseits, in einem Bereich des Spektrums, zur optischen Absorption, abhängig vom elektrischen Feld,

   - Lichteintrittseinrichtungen, um in die Schichtenfolge mit Potential- bzw. Quantentöpfen ein Arbeitslicht eintreten zu lassen, das sich in dem genannten Spektrumsbereich befindet, wobei besagtes Arbeitslicht zur Photogeneration von Elektron-Loch-Paaren durch Photonenabsorption in der genannten PIN-Struktur fähig ist.

   - Austrittseinrichtungen zum Empfangen des genannten Lichts nach Durchquerung der Schichtenfolge (SL),

   **dadurch gekennzeichnet**, daß die Anzahl, die Arten und die Geometrien der Folge (SL) von Schichten mit Potential- bzw. Quantentöpfen des Supergitters derart ausgewählt werden, daß sie im Ruhezustande ein selbstaufbauendes elektrischen Feld erzeugen, wegen der an seinen Anschlüssen durch die PIN-Überstruktur natürlich erzeugten Potentialdifferenz,

und dadurch, daß die kombinierte Wirkung des Wannier-Stark-Effekts und des genannten selbstaufbauenden elektrischen Feldes auf Elektron-Loch-Paare einen Selbstverstärkungseffekt der Absorptionsveränderungen der Schichtenfolge (SL) erzeugt,

was einen "rein optischen" bistabilen Effekt bewirkt, ohne Notwendigkeit, auf eine aktive oder passive äußere Schaltung zurückzugreifen.

2. Vorrichtung nach Anspruch 1, dadurch gekennzeichnet, daß die Anzahl, die Arten und die Geometrien der Schichten so gewählt werden, daß die Amplitude des selbstaufbauenden elektrischen Feldes sich im Ruhezustand in der Zone mit starkem elektrischem Feld eines Gebiets mit negativer Elektroabsorption befindet, den die Potential- bzw. Quantentöpfe-Schichtenfolge (SL) besitzt, mit der Wellenlänge des Arbeitslichts.

3. Vorrichtung nach Anspruch 2, dadurch gekennzeichnet, daß das Gebiet negativer Elektroabsorption zurückzuführen ist auf die Verschiebung der schrägen Übergänge des Wannier-Stark-Effekts in Abhängigkeit von dem elektrischen Feld.

4. Vorrichtung nach einem der Ansprüche 2 und 3, dadurch gekennzeichnet, daß das Supergitter (SL) folgende Bedingung erfüllt:

$Eg / N. D_{opt}$ etwas über ungefähr 1,

wo:

- Eg die Energie des verbotenen Bands des Supergitters ist,
- N die Anzahl der Quantentöpfe des Supergit-ters ist, und
- $D_{opt}$ die optische Bandbreite des Supergitters ist.

5. Vorrichtung nach Anspruch 4, gekennzeichnet durch die Bedingung $Eg/N.D_{opt}$ kleiner als ungefähr 3.

6. Vorrichtung nach einem der vorangehenden Ansprüche, dadurch gekennzeichnet, daß das Arbeitslicht im wesentlichen senkrecht ist zu den Schichten, was eine Matrix-Anordnung mit großen Abmessungen ermöglicht.

7. Vorrichtung nach Anspruch 6, dadurch gekennzeichnet, daß die Halbleiterschichten wenigstens zwei supergitterbildende Schichtenfolgen (SL1, SL2) mit Wannier-Stark-Effekt umfassen, eingeschlossen von Schichten, die mit ihnen wenigstens zwei abwechselnde PIN-Überstrukturen bilden.

8. Vorrichtung nach Anspruch 6, dadurch gekennzeichnet, daß die Halbleiterschichten sich in einem Fabry-Perot-Resonator (DM1, DM2) für die Wellenlänge des Arbeitslichts befinden, während die Lichteintrittseinrichtungen das Arbeitslicht auf ein erstes Ende dieses Resonators anwenden und die Austrittseinrichtungen besagtes Licht an einem zweiten Ende empfangen, das dem ersten Ende im wesentlichen gegenübersteht.

9. Signalverarbeitungsverfahren mit folgenden Schritten:

a) Erzeugen eines Arbeitslichts ($I_{in}$) einer ge-wählten Wellenlänge, dessen Amplitude für ein Signal repräsentativ ist,

b) Herstellen eines Stapels (1) aus Halbleiterschichten, eine PIN-überstruktur definierend, deren intrinsischer Teil (I), der eine Folge von Schichten enthält, die ein Supergitter von Quantentöpfen (SL) bilden, einerseits fähig ist zum Wannier-Stark-Effekt und andererseits, in einem Bereich des Spektrums, zu einer von dem elektrischen Feld abhängigen optischen Absorption,

c) Anwenden des Arbeitslichts ($I_{in}$) auf den Ein-gang der PIN-Überstruktur zur Photogeneration von Elektron-Loch-Paaren in der Potential-bzw. Quantentöpfe-Schichtenfolge (SL) durch Photonenabsorption,

dadurch gekennzeichnet, daß die Anzahl, die Arten und die Geometrien der Folge (SL) von Schichten mit Quantentöpfen des Supergitters derart ausgewählt werden, daß sie im Ruhezustande ein selbstaufbauendes elektrischen Feld erzeugen, wegen der an seinen Anschlüssen durch die PIN-Überstruktur natürlich erzeugten Potentialdifferenz,

und dadurch, daß die kombinierte Wirkung des Wannier-Stark-Effekts und des genannten selbstaufbauenden elektrischen Feldes auf Elektron-Loch-Paare einen Selbstverstärkungseffekt der Absorptionsveränderungen der Schichtenfolge (SL) erzeugt,

derart daß bei Durchführung des Schritts c) ein Hysteresisbereich in der Kennlinie der Lichtstärke am Ausgang der PIN-Überstruktur erscheint, der abhängig ist von der Arbeitslichtstärke am Eingang der PIN-Überstruktur.

10. Verfahren nach Anspruch 9, dadurch gekennzeichnet, daß die Anzahl, die Arten und die Geometrien der Schichten so gewählt werden, daß die Amplitude des selbstaufbauenden elektrischen Feldes sich im Ruhezustand in der Zone mit starkem elektrischem Feld eines Gebiets mit negativer Elektroabsorption befindet, den die Potential- bzw. Quantentöpfe-Schichtenfolge (SL) besitzt, mit der Wellenlänge des Arbeitslichts.

## Claims

1. Semiconductor device having optical bistability, of the type comprising:

   - semiconductor layers (1) forming a PIN superstructure whose intrinsic part (I), which comprises a sequence of layers forming a superlattice of quantum wells (SL), is capable, on the one hand, of the Wannier-Stark effect, and, on the other hand, in a range of the spectrum, of optical absorption depending on the electrical field,

   - light input means to admit into the sequence of quantum well layers a working light located in the said range of the spectrum, the said working light being capable of creating electron-hole pairs by photoconductivity in the said PIN structure, by absorption of photons, and

   - output means for collecting the said light after its passage through the sequence of layers (SL),

   characterized in that the number, the natures and the geometries of the layers of the sequence (SL) of quantum well layers of the superlattice are selected in such a way that the superlattice is capable of generating in the resting state an electrical field which is self-created as a result of the potential difference established naturally at its terminals by the PIN superstructure,

   and in that the combined effect of the said Wannier-Stark effect and of the said electrical field which is self-created in the resting state on the electron-hole pairs created by photoconductivity generates an effect of self-amplification of the variations of absorption of the said sequence (SL),

   which produces a "wholly optical" bistable effect without the necessity of using an external active or passive electrical circuit.

2. Device as claimed in Claim 1, characterized in that the number, the natures and the geometries of the layers are selected in such a way that the amplitude of the self-created electrical field is located, in the resting state, in the strong electrical field region of a negative electro-absorption domain of the sequence of quantum well layers (SL), at the wavelength of the working light.

3. Device as claimed in Claim 2, characterized in that the negative electro-absorption domain is due to the displacement of the oblique transitions of the Wannier-Stark effect as a function of the electrical field.

4. Device as claimed in one of Claims 2 and 3, characterized in that the superlattice (SL) satisfies the condition
   $Eg/N. D_{opt}$ slightly greater than approximately 1,
   where:

   - Eg is the energy of the forbidden band of the superlattice,
   - N is the number of quantum wells in the superlattice, and
   - $D_{opt}$ is the width of the optical band of the superlattice.

5. Device as claimed in Claim 4, characterized by the condition $Eg/N. D_{opt}$ less than approximately 3.

6. Device as claimed in one of the preceding claims, characterized in that the working light is substantially perpendicular to the layers, permitting an arrangement in large matrices.

7. Device as claimed in Claim 6, characterized in that the semiconductor layers comprise at least two sequences of layers (SL1, SL2) forming superlattices having the Wannier-Stark effect, sandwiched with layers forming with them at least two alternating PIN superstructures.

8. Device as claimed in Claim 6, characterized in that the semiconductor layers are housed in a Fabry-Pérot cavity (DM1, DM2) for the wavelength of the working light, while the light input means apply the working light to a first end of this cavity, and the output means collect the said light at a second end substantially opposite the first end.

9. Signal processing process in which:

   a) a working light ($I_{in}$), which has a chosen wavelength and whose amplitude is representative of a signal, is generated;

   b) a stack (1) of semiconductor layers is provided to form a PIN superstructure whose intrinsic part (I), which comprises a sequence of layers forming a superlattice of quantum wells (SL), is

14

capable, on the one hand, of the Wannier-Stark effect, and, on the other hand, of optical absorption depending on the electrical field, in a range of the spectrum including the said chosen wavelength, and

c) the working light ($I_{in}$) is applied to the input of the PIN superstructure to create electron-hole pairs by photoconductivity in the sequence of quantum well layers (SL), by absorption of photons,

characterized in that the number, the natures and the geometries of the layers of the sequence (SL) of quantum well layers of the superlattice are selected in such a way that the superlattice is capable of generating in the resting state an electrical field which is self-created as a result of the potential difference established naturally at its terminals by the PIN superstructure,

and in that the combined effect of the said Wannier-Stark effect and of the said electrical field which is self-created in the resting state on the electron-hole pairs created by photoconductivity generates an effect of self-amplification of the variations of absorption of the said sequence (SL),

in such a way that, when stage c) is carried out, a region of hysteresis appears in the response curve of the light intensity of the light leaving the PIN superstructure as a function of the intensity of the working light at the input of the said PIN superstructure.

10. Process as claimed in Claim 9, characterized in that the number, the natures and the geometries of the layers are selected in such a way that the amplitude of the self-created electrical field is located, in the resting state, in the strong electrical field region of a negative electro-absorption domain of the sequence of quantum well layers (SL), at the wavelength of the working light.

$I_{in}$

$I_2$

10

1

SL

11

$I_1$

## FIG.1

9

$I_{in}$

$I_2$

1

SL

$I_1$

## FIG.2

CC ～ | 1000Å | InGaAs | p⁺

E2 ～ | 1.8μm | InALAs | p

SLc2 ～ | InGaAs / InALAs | ( 10 couches )

SL ～ | InGaAs / InAl As | ( 20 périodes )

SLc1 ～ | InGaAs / InAl As | ( 10 couches )

E1 ～ | 1000 Å | InALAs | n

Su ～ | Inp | n⁺

FIG. 3

FIG.4

FIG.5

FİG. 6

FIG.7

# FIG.8

9_1

9_2

DrT

ENERGIE (meV)          FIG.9

880    900    920    940    960    980    1000

FIG. 10

FIG.11